(19) Europäisches Patentamt
European Patent Office
Office européen des brevets

(11) **EP 3 109 461 B1**

(12) **EUROPEAN PATENT SPECIFICATION**

(45) Date of publication and mention
of the grant of the patent:
**16.08.2023 Bulletin 2023/33**

(21) Application number: **15173728.5**

(22) Date of filing: **25.06.2015**

(51) International Patent Classification (IPC):
**F03D 7/02** $^{(2006.01)}$

(52) Cooperative Patent Classification (CPC):
**F03D 7/0224; F03D 7/0276; F03D 7/028**

(54) **OPERATING A WIND TURBINE**

BETRIEB EINER WINDTURBINE

FONCTIONNEMENT D'UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.12.2016 Bulletin 2016/52**

(73) Proprietor: **Siemens Gamesa Renewable Energy
A/S**
**7330 Brande (DK)**

(72) Inventors:
• **Esbensen, Thomas**
**7400 Herning (DK)**

• **Hoegh, Gustav**
**7400 Herning (DK)**

(74) Representative: **SGRE-Association
Siemens Gamesa Renewable
Energy GmbH & Co KG
Schlierseestraße 28
81539 München (DE)**

(56) References cited:
**EP-A1- 2 365 215      WO-A1-2014/048583
WO-A2-2009/153614    WO-A2-2011/000531
US-A1- 2011 089 694**

**Description**

The invention relates to a method and to a control device for operating a wind turbine. In addition, a wind turbine, a computer program product and a computer readable medium are suggested.

A wind turbine may comprise a wind turbine tower, a nacelle mounted on top of the wind turbine tower, a rotation shaft rotatable supported within the nacelle, wherein the rotation shaft has one or more rotor blade connected to it. Impacting wind may transfer kinetic energy to the rotor blades which cause the rotation shaft to rotate. The rotation shaft may be mechanically connected to a generator which produces electric energy upon rotation of the rotation shaft. The mechanical combination comprising the generator and the rotation shaft may be also referred to as drive train. The nacelle may be mounted at the wind turbine tower such that the nacelle may rotate around a vertical axis to direct the rotor shaft and thus the blades in the momentary wind direction which may be denoted as yawing.

For adjusting a transfer of kinetic energy comprised in the wind to the rotation shaft via the rotor blades the rotor blades may be rotated along a longitudinal axis of the rotor blades. Rotation of the rotor blade around its longitudinal axis (which may lie within a rotation plane being a plane perpendicular to the rotation axis or the rotation shaft) may also be referred to as adjusting a rotor blade pitch angle ("pitching"). Adjusting the rotor blade pitch angle may affect an efficiency or a degree of energy transfer from the wind to the rotor blade and thus to the wind turbine.

A variable speed wind turbine may have three different control goals (also referred to as "control strategy" or "operating strategy"), depending, e.g., on the wind speed. In low to moderate wind speeds, the control goal is maintaining a constant optimum rotor tip speed ratio (i.e. the ratio of rotor shaft speed ("rotor speed") to effective wind speed) for maximum aerodynamic efficiency. This is achieved by varying a rotor speed as the wind speed changes. In moderate winds, if the rotor reaches a rated speed before a rated power is reached, the rotor speed must be limited while the power fluctuates. The control goal is then the maintenance of approximately constant rotor speed. In moderate to high winds the control goal is the maintenance of constant rated power. This is required as the available power in the wind increases over the power conversion capabilities of the wind turbine. Additionally, transitions between these operating strategies must be managed smoothly by any successful control system design.

The advantage that pitch regulated wind turbines have is access to two control inputs, in particular "pitch angle" and "generator torque", to achieve the aforementioned control goals.

An optimal power production of the wind turbine at below rated power, i.e. below nominal power output may depend on the ability to apply an optimal pitch angle and track the optimal rotor tip speed ratio which depends on the effective wind speed.

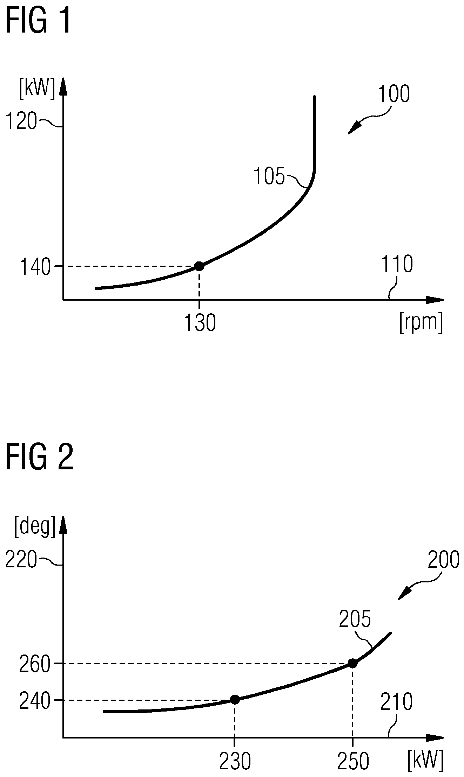

Unfortunately, it appears that the wind speed cannot be reliably measured across the rotor. To avoid using the wind speed a generator or rotor speed is used as a feedback signal for the control strategy. A corresponding control strategy is exemplarily shown by a graph 100 in Fig.1 representing a desired power production (also referred to as "output power") of a wind turbine as a function (represented by a plot 105) of a generator speed. Thereby, an abscissa 110 represents a rotational speed or the rotor or generator [rpm, revolutions per minute], an ordinate 120 represents a power reference [kW] .

The speed of a wind turbine, i.e. the rotor speed or generator speed, may be controlled by a speed power controller using the output power or power reference (also referred to as "desired output power") as a control parameter provided to a converter connected to the grid. Thereby, the speed power controller compares a speed reference and an actual generator speed. In case the actual generator speed is too low, the controller reduces the power reference. Accordingly, if the speed is too high, the controller increases the power reference.

The speed of a wind turbine may be also controlled by a speed pitch controller using a pitch reference as a control parameter to adjust a pitch angle or pitch position of the blades. By doing this it is possible to control an amount of energy being captured from the wind. If the generator or rotor speed is too high, at least one blade will be pitched out of the wind by increasing the blade pitch angle. Accordingly, at least one blade will be pitched in the wind by decreasing the blade pitch angle in case the speed is too low.

The adjustment of an optimum pitch angle is usually based on a lookup table with a fixed configuration enabling a compromise between reducing loads on the wind turbine as well as reducing acoustic noise and maximizing power production. The lookup table might be stored in a memory located, e.g., in the speed pitch controller.

The pitch angle being derived ("looked up") from the lookup table is a function of power corresponding to the actual output power of the wind turbine. As an example, an instantaneous or low-pass filtered output power of the wind turbine or generator might be used to derive or "look up" a corresponding pitch angel in the lookup table.

Fig.2 exemplarily shows a graph 200 representing an optimum pitch angle ([deg], represented by an ordinate 220) as a function (represented by a plot 205) of an output power ([kW], represented by an abscissa 210). As an example, according to known control strategies for variable speed wind turbines (see Fig.1), a desired output power 140 is determined by the speed power controller based on an actual rotor speed 130. Assuming that the determined output power 140 is provided as the power reference to the converter a corresponding optimum pitch angle 240 will be derived according to the plot 205 of the graph 200 wherein the derived output power 140 of graph 100 is used as an input parameter 230 in the graph 200.

Due to the usage of the output power as a basis for deriving the optimum pitch angle, the control of the wind turbine might be delayed.

The object is thus to overcome such disadvantage and in particular to provide an improved approach for operating a wind turbine. Documents WO2009/153614 and EP2365215 are prior art examples in controlling wind turbines.

This problem is solved according to the features of the independent claims. Further embodiments result from the depending claims.

In order to overcome this problem, a method is provided for operating a wind turbine, wherein

- an inflow power to the wind turbine is determined,
- a pitch angle of at least one rotor blade of the wind turbine is derived based on the inflow power.

At least one rotor blade of the wind turbine is adjusted according to the derived pitch angle, i.e. the operation of the wind turbine is controlled based on the determined inflow power.

By determining or estimating the input power to the wind turbine instead of using the derived output power of the wind turbine the adjustment of the pitch angle (which is also referred to as optimum pitch angle hereinafter) may react faster to rotor accelerations. Reacting faster to rotor accelerations reduces the maximum power input, e.g., to the drive train of the wind turbine which consequently reduces the structural loading on the wind turbine. Reducing the structural loading and thus reducing the rotor acceleration will also minimize the risk of over speed events which results in an improved turbine availability.

In an embodiment, the determined inflow power is used as an input parameter for deriving the pitch angle as a function of output power of the wind turbine.

In another embodiment,

- the function of power is represented by a lookup table,
- the pitch angle is derived by using the inflow power as input parameter to the lookup table.

Pursuant to another embodiment, the lookup table comprises power values exceeding the rated power of the wind turbine.

The lookup table may be an optimum pitch angle lookup table.

An optimum pitch angle is usually a function of output power which is limited by the rated power of the wind turbine. Using the proposed inflow power for deriving or determining the pitch angle by a lookup in the lookup table might require an extension of power values that exceed the rated power. Defining as an example conservative pitch angle values correlating to power values exceeding the rated power may result to pitch angles enabling load reductions when the inflow power exceed the output power.

According to a further possible embodiment,

- a pitch offset is determined based on the inflow power,
- the pitch angle of the at least one rotor blade is derived by adding the pitch offset to a further pitch angle determined based on a power output of the wind turbine.

The further pitch angle may be determined according to known solutions already explained above in relation to Fig.1 and Fig.2 thereby using the power output of the wind turbine as input parameter to the function 205 of the graph 200. According to the proposed solution, pitch offset is determined based on the inflow power wherein the further pitch angle is adjusted or corrected based on the pitch offset. The adjustment may be a simple adding of the pitch offset to the further pitch angle. It should be noted that alternative mathematical operations may be applied like, e.g., multiplication.

According to the invention, the inflow power is determined based on a rotor acceleration of the wind turbine.

In a next embodiment, the inflow power is determined based on an output power and a rotational inertia of the wind turbine. It is also an embodiment that the inflow power is determined based on the following equation

$$ P_{inflow} = \left( P_{out} + powerlosses \right) + J * \dot{\omega} $$

wherein:

| | |
|---|---|
| $P_{inflow}$ | represents the inflow power corresponding to the mechanical power going into the drive train, |
| $P_{out}$ | corresponds to the output power of the wind turbine which might be the electrical output power of the wind turbine, |

J                    corresponds to the rotational inertia of the wind turbine including rotor, drive train, etc.,

$\dot{\omega}$                    corresponds to the acceleration of the rotor, and

power losses    correspond to friction and electrical losses.

Pursuant to another embodiment, the pitch angle is derived during power production of the wind turbine at below rated power.

The problem stated above is also solved by a wind turbine comprising a processing unit that is arranged for

- determining an inflow power to the wind turbine
- deriving a pitch angle of at least one rotor blade based on the inflow power.

The problem stated supra is also solved by a control device comprising and/or being associated with a processor unit and/or hard-wired circuit and/or a logic device that is arranged such that the method as described herein is executable thereon.

It is noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Furthermore, the problem stated above is solved by a system comprising at least one device as described herein.

Embodiments of the invention are shown and illustrated in the following figures:

Fig.1    shows a graph representing a desired output power production of a wind turbine according to an exemplary control strategy;

Fig.2    exemplary shows a graph representing an optimum pitch angle as a function of output power;

Fig.3A    shows in a block diagram an exemplary embodiment of a control system according to the proposed solution;

Fig.3B    shows in a block diagram an alternative exemplary embodiment of the control system;

Fig.4    shows several corresponding graphs illustrating the effectiveness of the proposed solution.

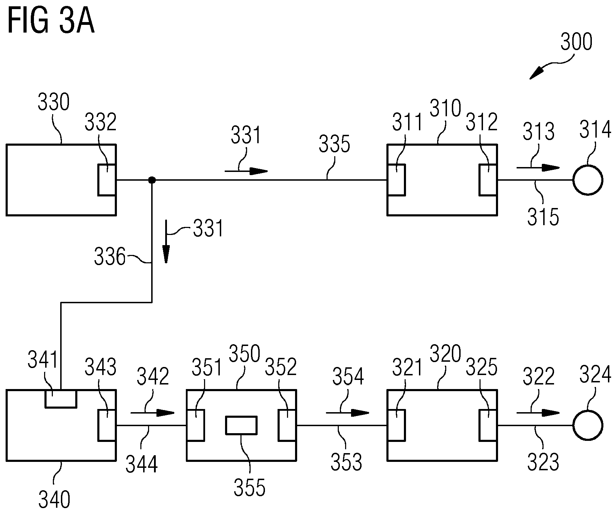

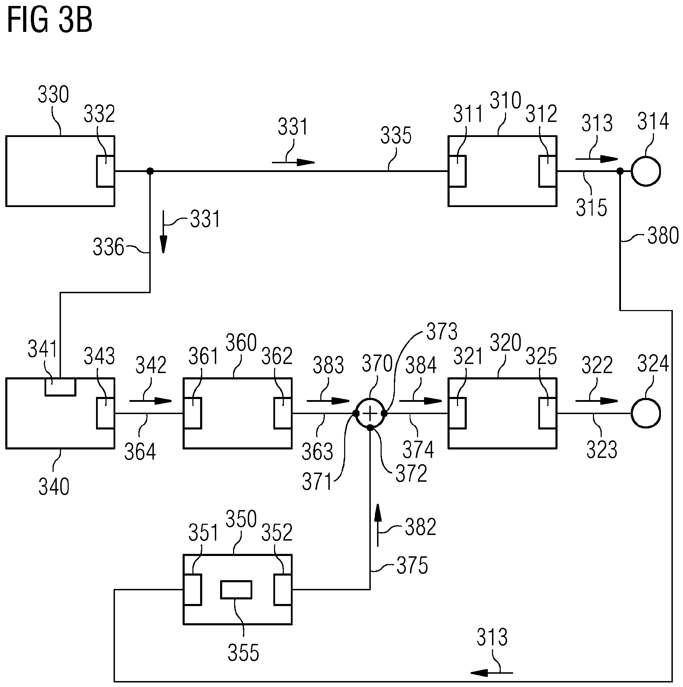

Fig.3 shows in a block diagram an exemplary embodiment of a control system according to the proposed solution.

A control system 300 comprises a speed power controller 310 and a speed pitch controller 320. Further, the control system 300 comprises a rotor speed sensor 330 for measuring a rotor speed like, e.g., a generator speed of the wind turbine. A signal 331 representing the measured rotor speed is generated by the rotor speed sensor 330, the signal 331 being provided via an output 332 and via a connection line 335 to an input 311 of the speed power controller 310. Based on the provided rotor speed a power reference is determined by the speed power controller 310 representing a desired output power of the wind turbine. A corresponding signal 313 representing the power reference is generated by the speed power controller 310 being forwarded via an output 312 and via a connection line 315 to a power reference terminal 314.

It should be noted that the power reference might be derived based on further control parameters (e.g. maximum power and/or minimum power, not being part of the description here) provided to the speed power controller 310.

The control system 300 further comprises an inflow power estimator 340 for determining a power available in an incoming wind, i.e. for determining an amount of power which can be extracted from the wind or which can be captured by the rotor. For that, the signal 331 representing the measured rotor speed is further provided via a connection line 336 to an input 341 of the inflow power estimator 340. Based on the provided rotor speed a signal 342 representing the estimated inflow power is generated by the inflow power estimator 340 being forwarded via an output 343 and via a connection 344 to an input 351 of an optimum pitch table 350. Based on the inflow power a corresponding optimum pitch angle is determined by using a lookup table as exemplarily shown in Fig.2. The lookup table might be stored in a memory 355 being part of the optimum pitch table 350.

Further on, a signal 354 representing the determined optimum pitch angle is generated by the optimum pitch table 350 being forwarded via an output 352 and via a connection line 353 to an input 321 of the speed pitch controller 320. Based on the provided optimum pitch angle a corresponding signal 322 representing a pitch reference is generated by the speed pitch controller 320, the signal 322 being forwarded via an output 325 and a connection line 323 to a pitch reference terminal 324.

It should be noted that the pitch reference might be derived based on further control parameters (e.g. actual rotor speed, not shown in Fig.3A) which might be provided to the speed pitch controller 320.

The proposed solution is based on the idea using the estimated inflow power provided by the inflow power estimator 340 as the input parameter for the optimum pitch table 350. Thus, the innovative aspect is the usage of the inflow power as the input parameter for deriving ("looking up") the corresponding optimum pitch angle instead of using the output power or power reference as input parameter as used in already existing solutions. By avoiding the necessary processing time being mandatory for applying the referenced output power for operating the wind turbine a faster reaction to rotor accelerations is possible which beneficially results, e.g., in a faster adjustment of the pitch angle and therefore in a general reduction of loads.

For further explanation reference is made again to Fig.1 and Fig.2 thereby assuming the following exemplary scenario:

A wind turbine is operated at the rotor speed 130 with the corresponding reference power 140 representing the desired output power. However, in the present scenario the rotor of the wind turbine is accelerating due to wind turbulences. As a consequence, the inflow power to the wind turbine is higher than the referenced power 140. In Fig.2 the increased amount of the estimated inflow power (exemplarily caused by the wind turbulences) is indicated by reference 250, wherein the amount or value of the estimated inflow power 250 (which corresponds to the inflow power represented by signal 342 in Fig.3A) is higher than the derived output power 230 without wind turbulences. Consequently, using the inflow power 250 instead of using the reference power 230 as the input parameter to the lookup table results in a pitch angle 260 which is different from the pitch angle 240 used before the upcoming wind turbulences with increasing wind speeds. Advantageously, using the inflow power 250 as input parameter and the resulting pitch angle 260 has the potential of reducing the loading of the wind turbine.

According to an advantageous embodiment, the lookup table as represented by the graph 200 in Fig.2 should be extended by including additional power values towards the abscissa 210 exceeding the nominal or rated power thereby allowing also the "lookup" of determined inflow power values being higher than the rated power.

Overall principle:

The estimated inflow power (represented by the signal 342 in Fig.3A) denotes the power captured by the rotor which is the power input to the drive train.

Due to, e.g., upcoming wind turbulences and thus increasing wind speeds the inflow power may exceed the current output power of the wind turbine which results in a rotor acceleration.

The larger the amount of inflow power is in relation to the output power the greater the rotor acceleration and thus the structural loading of the wind turbine.

An output power $P_{out}$ converted by a wind turbine is related to the wind speed as shown in the following equation:

$$P_{out} = 0.5 \rho A C_p V^3 \qquad (1)$$

wherein:

$\rho$ = mass density of air,
A = area swept by the rotor blades,
V = wind speed,
$C_p$ = no dimensional power coefficient

It should be noted that aforementioned equation (1) doesn't consider any dynamics like, e.g., rotor accelerations.

For a variable speed turbine, the objective is to operate near maximum efficiency, where the resulting target power and thus the output power $P_{out}$ can be expressed as shown in the following equation:

$$P_{out} = 0.5 \rho A C_p (R/TSR)^3 \omega^3 \qquad (2)$$

wherein:

$\rho$ = mass density of air,

R = rotor radius measured at the blade tip,
w = rotational speed of the blade,
A = area swept by the rotor blades,
$C_p$ = no dimensional power coefficient

The tip-speed-ratio (TSR), which is a no dimensional tip speed, is defined as the ratio between the rectilinear speed of the blade tip and the wind speed:

$$TSR = \omega R/V \qquad (3)$$

According to equation (2) the power at any wind speed is maximized by operating near tip speed ratio that results in the maximum power coefficient. For a variable speed turbine, this means that as the wind speed changes, the rotor speed should be adjusted proportionally.

In the practical matter of operating a wind turbine, the wind speed is not a satisfactory control parameter, because of its erratic nature and the time delays in its measurements. However, by simple manipulation of the aforementioned equations, the output power $P_{out}$ of (2) can be expressed as a function of the rotor speed $\omega$, a reliable and easily measured control parameter:

$$P_{out} = K\omega^3 \qquad (4)$$

wherein K represents computed wind turbine data.

Considering dynamic aspects:

It should be noted that rotor acceleration $\dot{\omega}$ might be minimized as long as the power extracted from the wind, less drive train losses, is equal to the output power and thus the electric power output of the generator. This relation is described by the following equation in terms of torque:

$$\dot{\omega} = \left(T_{\inf low} - T_{out}\right)/ J \qquad (5)$$

The rotor acceleration $\dot{\omega}$ is inversely proportional to the inertia J of the rotating system and directly proportional to the difference between an aerodynamic torque applied by the wind ($T_{inflow}$) and an electric torque of the generator ($T_{out}$). The aerodynamic torque is affected by the operating $C_p$.

In terms of power, equation (5) may be rewritten as follows:

$$P_{inflow} = \left(P_{out} + powerlosses\right) + J * \dot{\omega} \qquad (6)$$

wherein:

$P_{inflow}$ represents the inflow power corresponding to the mechanical power going into the drive train,

$P_{out}$ corresponds to the output power of the wind turbine which might be the electrical output power of the wind turbine,

J corresponds to the rotational inertia of the wind turbine including rotor, drive train, etc.,

$\dot{\omega}$ corresponds to the acceleration of the rotor, and

power losses correspond to friction and electrical losses.

The term ($P_{out}$ + *powerlosse s*) represents a static inflow power representing the mechanical power going into the drive train excluding rotor acceleration.

It should be noted that the determination of the inflow power as implemented in the inflow power estimator 340 may be applied according to equation (6). Thereby, the static inflow power being part of (6) may be derived according to equation (2) or (4).

Fig.3B shows in a block diagram an alternative exemplary embodiment of the proposed solution wherein only elements being different to Fig.3A are explained in more detail.

Contrary to Fig.3A the output 343 of the inflow estimator 340 is connected via a connection line 364 to an input 361 of a pitch offset logic 360. An output 362 of the pitch offset logic 360 is connected via a connection line 363 to an input 371 of an adding element 370 wherein an output 373 of the adding element 370 is connected via a connection line 374 to the input 321 of the speed pitch controller 320.

Further, the output 312 of the speed power controller 310 is additionally connected via a connection line 380 to the input 351 of the optimum pitch table 350 which output 352 is connected via a connection line 375 to an input 372 of the adding element 370.

In contrast to the embodiment of Fig.3A the signal 342 representing the estimated inflow power is forwarded to the pitch offset logic 360 instead to the optimum pitch table 350. Further, the signal 313 representing the power reference is forwarded to the input 351 of the optimum pitch table 350. Consequently, a signal 382 representing an optimum pitch angle is generated according to the function as shown in Fig.2 wherein the current power reference (signal 313) is used as an input parameter for the lookup table stored in a memory 355 located in the optimum pitch table 350.

In addition to the optimum pitch angle represented by signal 382 a pitch offset is derived by the pitch offset logic 360, wherein a signal 383 is generated representing the pitch offset, the signal 383 being forwarded via the connection line 363 to the input 371 of the adding element 370. The provided optimum pitch angle (signal 382) and the provided pitch offset (signal 383) are added by the adding element 370 wherein a signal 384 representing the added values as an correct-ed/adapted optimum pitch angle is generated and forwarded to the input 321 of the speed pitch controller 320.

The determination of the pitch offset being added to the optimum pitch angle is based on the following considerations:

To ensure load reductions only in high load conditions (e.g. during rapid accelerations of the rotor) the optimum pitch angle is changed (further) towards feather, i.e. the pitch angle is increased, when the inflow power is sufficiently larger than the output power. Otherwise the optimum pitch angle is not affected or only marginally.

As an example, two possible solutions can be applied based on the embodiment of Fig.3B:

Discrete solution:

A constant pitch offset is added to the optimum pitch angle if the inflow power is sufficiently larger that the output power. Alternatively or in addition to that the lookup table 355 of the optimum pitch table 350 is modified based on the determined inflow power if the inflow power is sufficiently larger than the output power (not shown in Fig.3B).

Continuous/Multistep solution:

A pitch offset is derived as a function of the determined inflow power being added to the optimum pitch angle. Alternatively or in addition to that the lookup table 355 of the optimum pitch table 350 is modified based on the determined inflow power (not shown in Fig.3B).

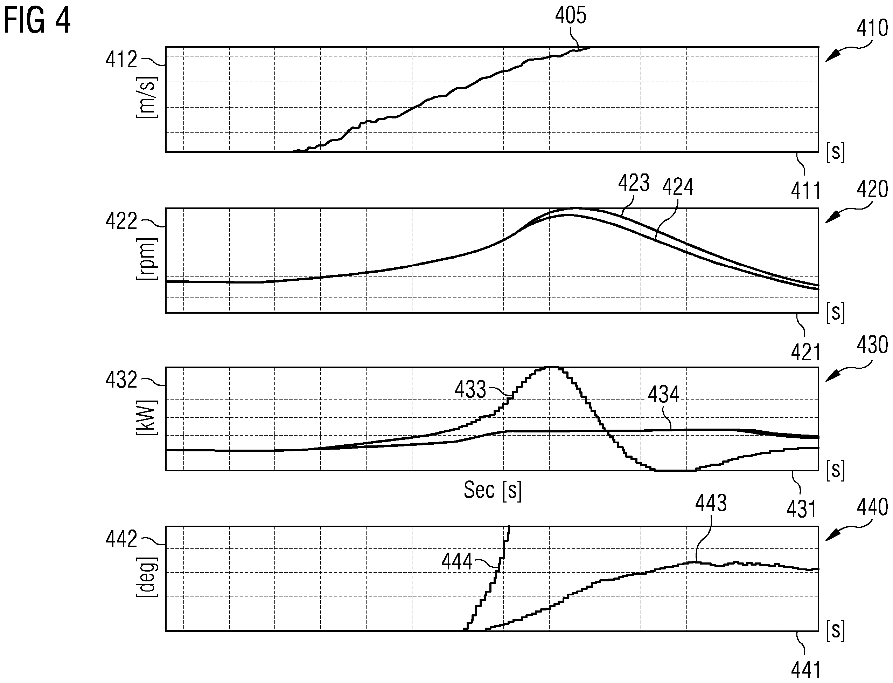

Fig.4 shows several corresponding graphs illustrating the effectiveness of the proposed solution.

Within a graph 410 a plot 405 visualizes a developing wind speed over time. Thereby, an abscissa 411 represents the time [s, seconds] and an ordinate 412 represents the wind speed [m/s, meter per second].

A graph 420 shows the rotor speed or generator speed over time. An abscissa 421 represents the time [s] and an ordinate 422 represents the generator speed [rpm, revolutions per minute]. Thereby a plot 423 visualizes the resulting rotor speed without using the proposed solution. Additionally, a plot 424 illustrates the resulting rotor speed by using the proposed solution.

A graph 430 illustrates a power over time, wherein an abscissa 431 represents the time [s] and an ordinate 432 represents the power [kW]. Thereby, a plot 433 shows an estimated inflow power according to the proposed solution. A plot 434 illustrates a corresponding output power or reference power of the wind turbine.

A graph 440 illustrates the pitch angle as derived by the speed pitch controller of Fig.3 over time. An abscissa 441 represents the time [s] and an ordinate 442 represents the pitch angle [deg]. A plot 443 shows the corresponding pitch angle without using the proposed solution. A plot 444 illustrates the resulting pitch angle by using the proposed solution.

It should be noted that the abscissas 411, 421, 431, 441 do have the same time basis, i.e. the plots 405, 423, 424, 433, 434, 443, 444 of the graphs 410, 420, 430 and 440 are synchronous.

According to graph 430 the estimated inflow power (plot 433) is significantly higher than the output power (plot 434). This might be caused by a significant amount of energy (e.g. due to wind turbulence) being used for the acceleration of the rotor thereby increasing the rotor speed. Applying the proposed solution, i.e. "looking up" the pitch angle from the lookup table according to the plot 205 as exemplarily shown in Fig.2 based on the inflow power (reference number 250) instead of using the desired output power (reference number 230), the resulting optimum pitch angle (reference number 260) is significantly higher than without using the inflow estimator (reference number 240). This advantageously reduces the maximum speed and thus the loading of the wind turbine.

According to the graph 420 of Fig.4, the rotor speed as represented by the plot 424 is much less than the rotor speed without using the proposed solution which is represented by the plot 423.

The optimum pitch angle according to known solutions is based on the current power output, which is delayed compared to the power captured by the rotor. By estimating the inflow power, i.e. input power to the drive train and using the inflow power for lookup in the optimum pitch table/curve according to the proposed solution enables load reduction during increasing wind speeds ("gusts").

According to a further aspect of the proposed solution, adjustments to the optimum pitch angle are primarily made when the turbine is operating in high loads (harsh) conditions, i.e. when severe rotor accelerations occur. As a consequence, the effect on "Annular Energy Production (AEP)" is minimized compared to a constant adjustment of the optimum pitch angle.

For gentle conditions there will either be no or only a minor impact on the optimum pitch angle wherein the risk of over speed events is reduced and ultimate loads are lowered. Due to the proposed ongoing or online inflow power estimation it is possible to react to situations tougher than anticipated or forecasted for a specific site or design which results in increased safety against structural failure.

A further aspect is the improved ability to control the rotor or generator speed by additional increment of the pitch angle compared to the pitch angle providing the highest power capture for a given operating point. This results in an improved sensitivity. Hence, pitching towards feather (i.e. increasing the pitch angle) relative to this optimum point will reduce the power capture of the rotor and further will increase the sensitivity of the pitch to control the power inflow, i.e. the sensitivity to control the speed of the wind turbine. Therefore it may be beneficial to increase the optimum pitch angle for a operating point close the rated wind speed to prevent severe loading and risk of over speed when the wind picks up close to rated wind speeds.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention as defined by the appended claims.

## Claims

1.    A method for operating a wind turbine, wherein

      - an inflow power (342) to the wind turbine is determined, wherein the inflow power is representing a power available in an incoming wind,
      - a pitch angle (354, 384) of at least one rotor blade of the wind turbine is derived based on the inflow power (342),
      - the inflow power (342) is determined based on a rotor acceleration of the wind turbine.

2.    The method according to claim 1, wherein the determined inflow power (342) is used as an input parameter for deriving the pitch angle (354) as a function (205) of output power of the wind turbine.

3.    The method according to claim 2, wherein

      - the function (205) of power is represented by a lookup table (200),
      - the pitch angle (354) is derived by using the inflow power (342) as input parameter to the lookup table.

4.    The method according to claim 3, wherein the lookup table (200) comprises power values exceeding the rated power of the wind turbine.

5.    The method according to claim 1, wherein

      - a pitch offset (383) is determined based on the inflow power (242),
      - the pitch angle (384) of the at least one rotor blade is derived by adding the pitch offset (383) to a further pitch angle (382) determined based on a power output (313) of the wind turbine.

6.    The method according to any of the proceeding claims, wherein

the inflow power (342) is determined based on an output power and a rotational inertia of the wind turbine.

7. The method according to claim 6, wherein the inflow power (342) is determined based on the following equation

$$P_{inflow} = \left(P_{out} + powerlosses\right) + J * \dot{\omega} \qquad (6)$$

wherein:

$P_{inflow}$ represents the inflow power (342) corresponding to the mechanical power going into the drive train,
$P_{out}$ corresponds to the output power of the wind turbine which might be the electrical output power of the wind turbine,
J corresponds to the rotational inertia of the wind turbine including rotor, drive train, etc.,
$\dot{\omega}$ corresponds to the acceleration of the rotor, and
power losses correspond to friction and electrical losses.

8. A Wind turbine comprising
a processing unit that is arranged for

- determining an inflow power (342) to the wind turbine, wherein the inflow power is representing a power available in an incoming wind,
- deriving a pitch angle (354, 384) of at least one rotor blade of the wind turbine based on the inflow power (342),
- the inflow power (342) is determined based on a rotor acceleration of the wind turbine.

9. A control device comprising and/or being associated with a processor unit and/or hard-wired circuit and/or a logic device that is arranged such that the method according to any of the preceding claims 1 to 7 is executable thereon.

10. A computer program product directly loadable into a memory of a digital computer, comprising software code portions for performing the steps of the method according to any of the claims 1 to 7.

11. A computer readable medium, having computer-executable instructions adapted to cause a computer system to perform the steps of the method according to any of the claims 1 to 7.


**Patentansprüche**

1. Verfahren zum Betreiben einer Windturbine, wobei

- eine Anströmleistung (342) zu der Windturbine bestimmt wird, wobei die Anströmleistung eine in einem ankommenden Wind verfügbare Leistung darstellt,
- ein Anstellwinkel (354, 384) von mindestens einem Rotorblatt der Windturbine auf der Grundlage der Anströmleistung (342) abgeleitet wird,
- die Anströmleistung (342) auf der Grundlage einer Rotorbeschleunigung der Windturbine bestimmt wird.

2. Verfahren nach Anspruch 1, wobei die ermittelte Anströmleistung (342) als Eingabeparameter für die Ableitung des Anstellwinkels (354) als Funktion (205) der Ausgangsleistung der Windturbine verwendet wird.

3. Verfahren gemäß Anspruch 2, wobei

- die Funktion (205) der Leistung durch eine Nachschlagetabelle (200) dargestellt wird,
- der Anstellwinkel (354) unter Verwendung der Anströmleistung (342) als Eingabeparameter für die Nachschlagetabelle abgeleitet wird.

4. Verfahren nach Anspruch 3, wobei die Nachschlagetabelle (200) Leistungswerte enthält, die die Nennleistung der Windturbine übersteigen.

5. Verfahren gemäß Anspruch 1, wobei

- ein Steigungsversatz (383) auf der Grundlage der Anströmleistung (242) bestimmt wird,
- der Anstellwinkel (384) des mindestens einen Rotorblatts abgeleitet wird, indem der Steigungsversatz (383) zu einem weiteren Anstellwinkel (382) addiert wird, der auf der Grundlage einer Leistungsabgabe (313) der Windturbine bestimmt wird.

6.  Verfahren nach einem der vorhergehenden Ansprüche, wobei die Anströmleistung (342) auf der Grundlage einer Ausgangsleistung und einer Rotationsträgheit der Windturbine bestimmt wird.

7.  Verfahren nach Anspruch 6, wobei die Anströmleistung (342) auf der Grundlage der folgenden Gleichung bestimmt wird:

$$P_{inflow} = (P_{out} + powerlosses) + J * \dot{\omega} \qquad (6)$$

wobei:

$P_{inflow}$ die Anströmleistung (342) darstellt, die der in den Antriebsstrang eingehenden mechanischen Leistung entspricht,
$P_{out}$ der Ausgangsleistung der Windturbine entspricht, die die elektrische Ausgangsleistung der Windturbine sein kann,
$J$ der Rotationsträgheit der Windturbine einschließlich Rotor, Antriebsstrang usw. entspricht,
$\dot{\omega}$ der Beschleunigung des Rotors entspricht, und
**powerlosses** den Reibungs- und elektrischen Verlusten entspricht.

8.  Windturbine, eine Verarbeitungseinheit umfassend, die für Folgendes eingerichtet ist:

- Bestimmen einer Anströmleistung (342) zur Windturbine, wobei die Anströmleistung eine Leistung darstellt, die in einem ankommenden Wind verfügbar ist,
- Ableiten eines Anstellwinkels (354, 384) von mindestens einem Rotorblatt der Windturbine auf der Grundlage der Anströmleistung (342),
- die Anströmleistung (342) auf der Grundlage einer Rotorbeschleunigung der Windturbine bestimmt wird.

9.  Steuergerät, das eine Prozessoreinheit und/oder eine festverdrahtete Schaltung und/oder eine Logikvorrichtung umfasst und/oder damit verbunden ist, die so angeordnet ist, dass das Verfahren nach einem der vorhergehenden Ansprüche 1 bis 7 darauf ausführbar ist.

10. Computerprogrammprodukt, das direkt in einen Speicher eines digitalen Computers geladen werden kann und Software-Codeteile zur Durchführung der Schritte des Verfahrens nach einem der Ansprüche 1 bis 7 enthält.

11. Computerlesbares Medium mit computerausführbaren Anweisungen, die geeignet sind, ein Computersystem zu veranlassen, die Schritte des Verfahrens nach einem der Ansprüche 1 bis 7 durchzuführen.

**Revendications**

1.  Procédé pour faire fonctionner une éolienne, dans lequel :

- une puissance d'admission (342) sur l'éolienne est déterminée, dans lequel la puissance d'admission représente une puissance qui est disponible dans un vent arrivant ;
- un angle d'inclinaison (354, 384) d'au moins une pale de rotor de l'éolienne est dérivé sur la base de la puissance d'admission (342) ; et
- la puissance d'admission (342) est déterminée sur la base d'une accélération de rotor de l'éolienne.

2.  Procédé selon la revendication 1, dans lequel :
la puissance d'admission déterminée (342) est utilisée en tant que paramètre d'entrée pour dériver l'angle d'inclinaison (354) en tant que fonction (205) de la puissance de sortie de l'éolienne.

3.  Procédé selon la revendication 2, dans lequel :

- la fonction (205) de la puissance est représentée au moyen d'une table de consultation (200) ; et
- l'angle d'inclinaison (354) est dérivé en utilisant la puissance d'admission (342) en tant que paramètre d'entrée sur la table de consultation.

4. Procédé selon la revendication 3, dans lequel :
la table de consultation (200) comprend des valeurs de puissance qui excèdent la puissance nominale de l'éolienne.

5. Procédé selon la revendication 1, dans lequel :

- un décalage d'inclinaison (383) est déterminé sur la base de la puissance d'admission (342) ; et
- l'angle d'inclinaison (384) de l'au moins une pale de rotor est dérivé en ajoutant le décalage d'inclinaison (383) à un autre angle d'inclinaison (382) qui est déterminé sur la base d'une sortie de puissance (313) de l'éolienne.

6. Procédé selon l'une quelconque des revendications précédentes, dans lequel :
la puissance d'admission (342) est déterminée sur la base d'une puissance de sortie et d'une inertie de rotation de l'éolienne.

7. Procédé selon la revendication 6, dans lequel la puissance d'admission (342) est déterminée sur la base de l'équation qui suit :

$$P_{inflow} = (P_{out} + power\ losses) + J * \dot{\omega} \qquad (6)$$

dans laquelle :

$P_{inflow}$ représente la puissance d'admission (342) qui correspond à la puissance mécanique aboutissant dans la chaîne cinématique ;
$P_{out}$ correspond à la puissance de sortie de l'éolienne qui pourrait être la puissance de sortie électrique de l'éolienne ;
$J$ correspond à l'inertie de rotation de l'éolienne qui inclut le rotor, la chaîne cinématique, etc. ;
$\dot{\omega}$ correspond à l'accélération du rotor ; et
**power losses** correspond aux pertes de friction et électriques.

8. Éolienne comprenant une unité de traitement qui est agencée pour :

- déterminer une puissance d'admission (342) sur l'éolienne, dans laquelle la puissance d'admission représente une puissance qui est disponible dans un vent arrivant ; et pour
- dériver un angle d'inclinaison (354, 384) d'au moins une pale de rotor de l'éolienne sur la base de la puissance d'admission (342) ;
- la puissance d'admission (342) est déterminée sur la base d'une accélération de rotor de l'éolienne.

9. Dispositif de commande comprenant et/ou associé à une unité de processeur et/ou un circuit câblé et/ou un dispositif logique qui sont/est agencé(e)(s) de telle sorte que le procédé selon l'une quelconque des revendications précédentes 1 à 7 puisse être exécuté dessus.

10. Produit de programme informatique pouvant être chargé directement à l'intérieur d'une mémoire d'un ordinateur numérique, comprenant des parties de code de logiciel pour réaliser les étapes du procédé selon l'une quelconque des revendications 1 à 7.

11. Support pouvant être lu par un ordinateur, comportant des instructions pouvant être exécutées par un ordinateur qui sont adaptées pour forcer un système d'ordinateur à réaliser les étapes du procédé selon l'une quelconque des revendications 1 à 7.

FIG 1

FIG 2

# FIG 3A

# FIG 3B

FIG 4

EP 3 109 461 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009153614 A

- EP 2365215 A